(19) Europäisches Patentamt
European Patent Office
Office européen des brevets

(11) EP 4 559 951 A1

(12) EUROPEAN PATENT APPLICATION

(43) Date of publication:
**28.05.2025 Bulletin 2025/22**

(21) Application number: **23383211.2**

(22) Date of filing: **24.11.2023**

(51) International Patent Classification (IPC):
***C08G 64/14*** *(2006.01)*

(52) Cooperative Patent Classification (CPC):
**C08G 64/14**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **SABIC Global Technologies B.V.**
**4612 PX Bergen op Zoom (NL)**

(72) Inventors:
- **Dhar, Dwairath**
  **P.O. Box 3008 6160 GA Geleen (NL)**
- **Bojarski, Aaron David**
  **P.O. Box 3008 6160 GA Geleen (NL)**
- **Del Agua Hernandez, David**
  **P.O. Box 3008 6160 GA Geleen (NL)**

(74) Representative: **Algemeen Octrooi- en Merkenbureau B.V.**
**P.O. Box 645**
**5600 AP Eindhoven (NL)**

# (54) METHOD FOR THE MANUFACTURE OF POLYCARBONATE RESIN

(57) The present invention relates to a method for preparing an end-capped polycarbonate resin, comprising the steps of: providing a polycarbonate having a terminal hydroxyl content of at least 10 ppm, determined in accordance with the method said out in the description; and reacting said polycarbonate with an end-capping reagent, wherein said reacting occurs in a molten phase; wherein said end-capping reagent comprises an acid anhydride. The present invention further relates to an end-capped polycarbonate resin obtainable by or obtained with such a method. The present invention further relates to a molded article comprising or consisting of this end-capped polycarbonate resin, as well as to a method for the manufacture of such a molded article. The present invention further relates to the use of an acid anhydride as an end-capping reagent for reacting with a polycarbonate having at least 10 ppm of free-hydroxyl end-groups to obtain an end-capped polycarbonate resin with a reduced amount of residual dihydroxy compound or residual bisphenol A compared to the amount of residual dihydroxy compound in the polycarbonate

EP 4 559 951 A1

## Description

The present invention relates to a method for the manufacture of polycarbonate resin.

Polycarbonate resins are a well-known material and generally exhibits good mechanical and optical properties. Typical applications include optical media carriers, glazing, extruded sheets, lenses and water bottles. Polycarbonate resins are generally manufactured using two different technologies. In a first technology, known as the interfacial technology or interfacial process, phosgene is reacted with one or more bisphenols such as bisphenol A (BPA) in a liquid phase. Another well-known technology for the manufacture of polycarbonate resin is the so-called melt technology, sometimes also referred to as melt transesterification or melt polycondensation technology. In the melt technology, or melt process, a dihydroxy compound, typically a bisphenol, more typically BPA, is reacted with a carbonate, typically a diaryl carbonate, more typically diphenyl carbonate (DPC), in the melt phase. A transesterification catalyst is generally used to reach the desired molecular weight and to advance the polycondensation reaction.

In the interfacial process the polycarbonate is dissolved in a solvent such as methylene chloride, chlorobenzene, or a mixture of both and the process includes several purification steps prior to the polycarbonate resin being isolated and provided in powder or pellet form. This means that typically interfacial polycarbonate resin is substantially free of catalyst or catalyst residues and has a low amount of other impurities.

In the melt process the polycarbonate resin is directly obtained from a final reactor and it is not possible, or at least not economically feasible, to purify the polycarbonate resin. This means that any contaminant that was contained in the raw materials or was generated during the polymerisation process, and further the catalyst or catalyst residues remain present in the obtained polycarbonate resin. Apart from that, a polycarbonate resin obtained by the melt transesterification process is also known to be structurally different from interfacial polycarbonate resin. First of all, melt polycarbonate resin typically has a minimum amount of branching caused by Fries and/or Kolbe-Schmidt rearrangement mechanisms, which branching is generally absent in interfacial polycarbonate resin. Secondly, melt polycarbonate resin typically has a much higher number of phenolic hydroxyl end groups while polycarbonate resin obtained by the interfacial process is typically end-capped and has at most 150 ppm, preferably at most 50 ppm, more preferably at most 10 ppm of phenol hydroxyl end-groups.

Polycarbonate resins prepared by the reaction of a dihydroxyl compound such as a bisphenol (such as bisphenol A, "BPA") and a carbonate such as a diaryl carbonate (such as diphenyl carbonate, "DPC") in a melt transesterification process generally contain significant levels of uncapped chains (7-50%) as compared to interfacially prepared polycarbonate resins. These uncapped chains can have a significant impact on the resulting properties of polycarbonate resin, and it is therefore desirable in many instances to include an end-capping reagent with a higher capping efficiency than DPC during or after the polymerization reaction which terminates the uncapped chains.

Known end-capping reagents are frequently carbonate or ester derivatives of phenol or even monohydric phenols themselves. Well-known examples are para-cumyl phenol (PCP), 4-tertiary butyl phenol (TBP) and 4-octyl phenol (OP).

US 2003/144456 A1 discloses a method for end-capping polycarbonate resins in a melt transesterification reaction to produce a polycarbonate resin, wherein para-cumyl phenol (PCP) is used as end-capping reagent.

US6706846B2 discloses a method for end-capping polycarbonate resins, comprising the step of processing a mixture comprising a polycarbonate having free hydroxyl-end groups and an end-capping reagent in a melt transesterification reaction to produce a polycarbonate resin, wherein the end-capping reagent comprises a mixture of: (a) at least one species of a symmetrical activated aromatic carbonate, and (b) at least one species of an optionally-substituted phenol, whereby said end-capping reagent reacts with at least some of the free hydroxyl end-groups of the polycarbonate to produce an end-capped polycarbonate resin.

There is a need for an end-capped polycarbonate resin which contains a low amount of the starting material dihydroxy compound, such as bisphenol, for example bisphenol A (BPA). There is a further need for an end-capped polycarbonate resin wherein the MW is kept at an acceptable minimum level. There is a further need for a method for manufacturing an end-capped polycarbonate resin with a high end-capping percentage.

Accordingly, it is an object of the present invention to provide a method that results in an improved polycarbonate resin.

It is a further object of the present invention to provide a method for manufacturing that results in a polycarbonate resin which contains a low amount of the starting material dihydroxy compound, such as bisphenol, for example bisphenol A (BPA) while the MW is kept at an acceptable level.

It is a further object of the present invention to provide a method for manufacturing an end-capped polycarbonate resin with a high end-capping percentage.

The foregoing objects are met, at least in part, in accordance with a first aspect of the invention which is directed at a method for preparing an end-capped polycarbonate resin, comprising the steps of: providing a polycarbonate having at least 10 ppm free-hydroxyl end groups; and reacting said polycarbonate with an end-capping reagent, wherein said reacting occurs in a molten phase; wherein said end-capping reagent comprises an acid anhydride.

It was surprisingly found that the use of and end-capping reagent comprising an acid anhydride results in a polycarbonate resin having a low amount of residual dihydroxy compound in the polycarbonate, and a relatively high molecular weight, as well as a high end-capping percentage. A high end-capping percentage leads to improved hydrostability, color and may even lead to improved mechanical properties such as impact resistance.

In an embodiment, the polycarbonate has between 1 0ppm - 1500ppm of free-hydroxyl end groups. The amount of free-hydroxyl end groups can be determined via 31P NMR.

End-capping reagent

The end-capping reagent comprises or consists of acid anhydride. For the purpose of the present invention the end-capping reagent preferably comprises at least 50% of acid anhydride. More preferably, the end-capping reagent comprises at least 80 wt.%, such as at least 90 wt.% or 100 wt.% of acid anhydride. The acid anhydride may be one acid anhydrite or a combination of two or more acid anhydrides. In an embodiment, the end-capping reagent may also comprise other compounds than acid anhydride. Examples include phenol, p-tertbutylphenol, p-cumylphenol, octylphenol, nonylphenol and other endcapping reagents well-known in the art.

The acid anhydride is preferably selected from a symmetric or asymmetric acyclic anhydride, a cyclic anhydride, a dianhydride or a combination thereof. Preferably, the acid anhydride is symmetric.

The acid anhydride may be an acyclic anhydride according to Formula I:

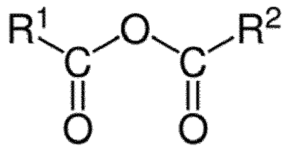

,

(I)

wherein $R^1$ and $R^2$ are independently selected from substituted or unsubstituted, linear or branched C1-C20 hydrocarbon group. In an embodiment, the hydrocarbon group is selected from an alkane, alkene, alkyne or aryl group. In an embodiment, $R^1 = R^2$, the anhydride being a symmetric acyclic anhydride.

Preferably, the acyclic anhydride is a symmetrical aromatic carbonate according to formula II:

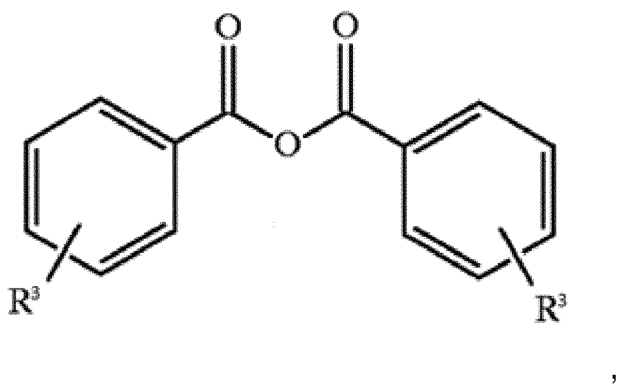

,

(II)

wherein $R^3$ is selected from hydrogen, halogen, aryl, branched alkane, alkyne, carboxyl, and CN. For example, the phenyl groups may have a halogen substituted on the meta or para position. In another example, the phenyl groups may have a hydrogen, aryl, branched alkane, alkyne, carboxyl, or CN substituted on the para position of the phenyl group. The acyclic anhydride may also have one or more further substitutions on the phenyl-groups, which further substitutions may be the same or different from $R^3$.

The acid anhydride may be a cyclic anhydride being an optionally substituted phthalic anhydride according to III:

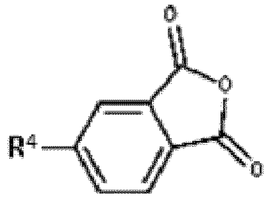,

(III)

wherein $R^4$ is selected from carboxyl and halogen.

For the purpose of the present invention the acid anhydride is preferably selected from

1) 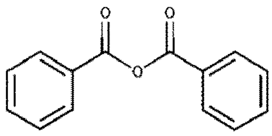, 2) 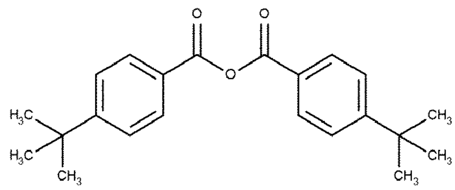,

3) 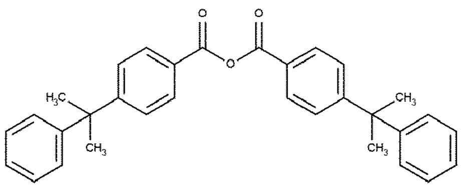, 4) 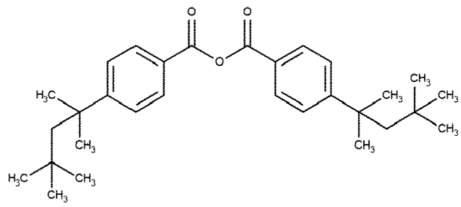,

5) 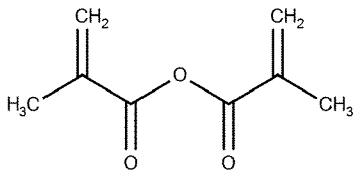, 6) 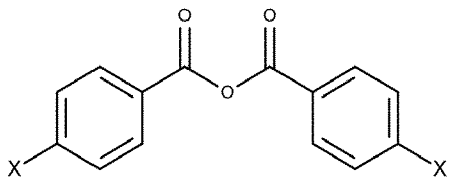,

7) 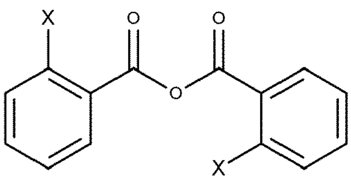, 8) 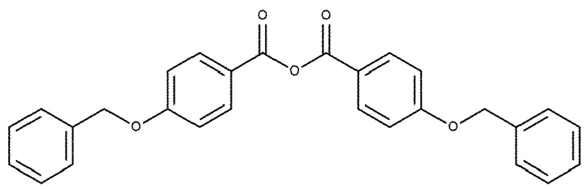,

9) 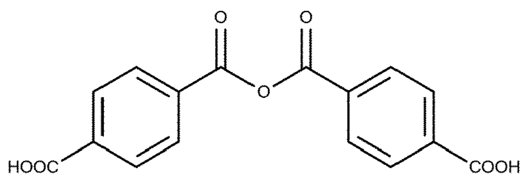,

10) 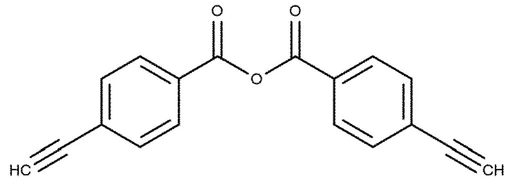, 11) 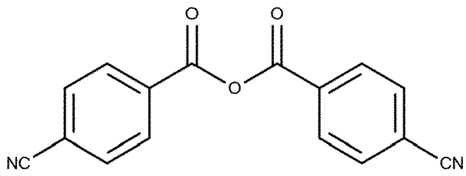,

12) 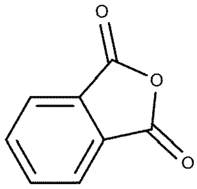, 13) 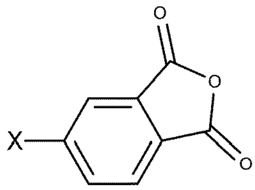, 14) 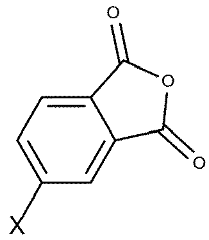,

15) 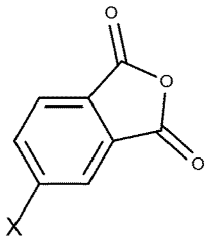, 16) 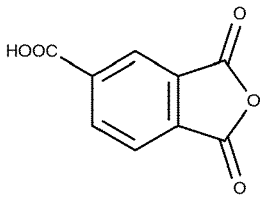, 17) 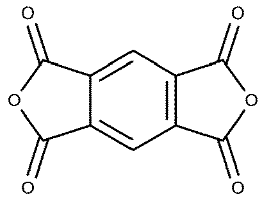,

18) 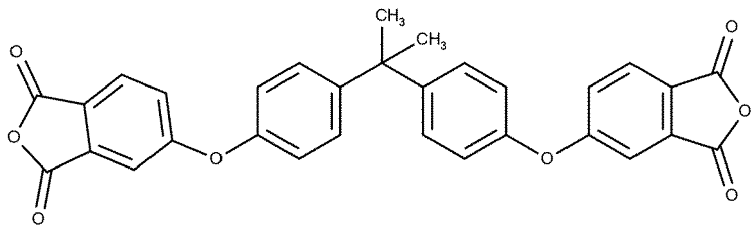,

19) 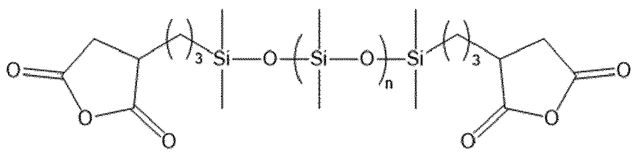,

20) 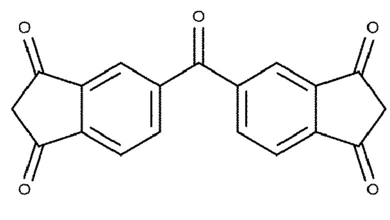,

or combinations thereof, wherein each X is independently selected from F, Cl, Br, and I, and n represents an integer between 1 and 10.

In an embodiment, the acid anhydride is according to formula 1), which is benzoic anhydride.

In an embodiment, the acid anhydride has not more than two anhydride functionalities, i.e. the acid anhydride has one anhydride functionality or two anhydride functionalities.

Preferably, the end-capping reagent is added in an amount such that the mole ratio of total carbonate in the end-capping reagent to free-hydroxyl end groups is from 0.5 to 10.

The amount of end-capping reagent to be added and mixed is for instance between 0.5 and 10 wt.%, such as between 1 and 4 wt% based on the weight of the polycarbonate. The present inventors found that if the amount of end-capping reagent is too high this may result in by-products such as acids remaining with the polycarbonate causing undesirable effect. A too low amount will generally not have the desired effect.

For the purpose of the present invention the acid anhydride preferably has a purity of at least 95%, preferably at least 98%.

In an embodiment, the end-capping reagent may also comprise other terminators. Examples of terminators include phenol, p-tertbutylphenol, p-cumylphenol, octylphenol, nonylphenol and other endcapping reagents well-known in the art.

The end-capping reagent may be provided in a molten phase or solubilized in an appropriate solvent. Alternatively, the end-capping reagent may be provided in a solid phase.

Starting polycarbonate

The starting polycarbonate may be any polycarbonate in particulate form. The starting polycarbonate may be polycarbonate in powder form, polycarbonate in pellet form or polycarbonate in flake form.

The polycarbonate may be provided in a molten phase. Alternatively, the polycarbonate may be provided in a solid phase. A physical mixture of both the polycarbonate and the end-capping reagent in solid phase can be molten together to undergo a reaction.

The starting polycarbonate may comprise or consist of polycarbonate that has been prepared by interfacial technology (hereinafter also referred as interfacial polycarbonate). Interfacial process does not involve use of a transesterification catalyst as in the melt technology and therefore interfacial polycarbonate does not comprise a catalyst quencher (also referred as catalyst deactivator, quencher or quenching agent) such as butyl tosylate for deactivating the transesterification catalyst.

The starting polycarbonate may comprise or consist of polycarbonate that has been prepared by melt technology. The starting polycarbonate may comprise or consist of polycarbonate that has been prepared by a process comprising the steps of

- melt reacting a dihydroxy compound and a carbonate in the presence of a transesterification catalyst, thereby forming a polycarbonate in molten phase and
- reacting said polycarbonate in molten phase with a catalyst quencher for deactivating the transesterification catalyst at least in part.

The starting polycarbonate may comprise or consist of recycled polycarbonate. Recycled polycarbonate may have a higher amount of dihydroxy compound or bisphenol A than virgin material resulting from aging of the material or because of the way it was processed initially. Thus, it may be that the polycarbonate has an amount of dihydroxy compound or bisphenol A of at least 10 ppm.

The preparation methods of polycarbonate such as the melt technology and the interfacial technology are well-known to the skilled person and are not described herein in detail.

The skilled person will appreciate that the polycarbonate may be any type of polycarbonate, as long as it has at least 10 ppm free-hydroxyl end groups. In some preferred embodiments, the polycarbonate comprises or consists of bisphenol A (BPA) polycarbonate homopolymer. The polycarbonate may alternatively comprise or consist of a copolymer. Examples of suitable copolymers copolymers of BPA with other dihydroxy compounds (such as other bisphenols), polycarbonate - polyorganosiloxane copolymers (such as poly-dimethyl-siloxane, PDMS), brominated polycarbonate copolymer of BPA and tetrabromobisphenol A (TBBPA)).

Reacting the polycarbonate with the end-capping reagent

Said reacting of the polycarbonate with the end-capping reagent may take place in a melt mixing device. Examples of suitable melt mixing devices include an extruder, internal mixer, or a polymerization reactor in the melt process. The skilled person will understand that the device or vessel where the reaction takes place is not limited, as long as it allows for the anhydride to react with the polycarbonate.

The starting polycarbonate may be fed to the melt mixing device in its pure form or as a mixture of the polycarbonate and additives, for example pellets comprising or consisting of the polycarbonate and additives.

Suitable examples of the additives in the mixture (e.g. pellets) include one or more of an impact modifier, flow modifier, filler, reinforcing agent (e.g., glass fibers or talc), antioxidant, heat stabilizer, light stabilizer, UV light stabilizer and/or UV absorbing additive, plasticizer, lubricant, release agent, in particular glycerol monostearate, pentaerythritol tetra stearate, glycerol tristearate, stearyl stearate, antistatic agent, antifog agent, antimicrobial agent, colorant (e.g., a dye or

pigment), flame retardant either or not combined with an anti-drip agent such as polytetrafluoroethylene (PTFE) or PTFE-encapsulated styrene-acrylonitrile copolymer. The present invention is not limited in terms of the type and amount of additives and an embodiment is possible wherein none of these additives exemplified above is added.

In some embodiments, the method further comprises combining the polycarbonate with additives. The additives may be selected from the group consisting of an impact modifier, flow modifier, filler, reinforcing agent (e.g., glass fibers or talc), antioxidant, heat stabilizer, light stabilizer, UV light stabilizer and/or UV absorbing additive, plasticizer, lubricant, release agent, in particular glycerol monostearate, pentaerythritol tetra stearate, glycerol tristearate, stearyl stearate, antistatic agent, antifog agent, antimicrobial agent, colorant (e.g., a dye or pigment), flame retardant either or not combined with an anti-drip agent such as polytetrafluoroethylene (PTFE) or PTFE-encapsulated styrene-acrylonitrile copolymer. The additives may be a non-polymeric additive such as the non-polymeric additives in this group. The present invention is not limited in terms of the type and amount of additives.

The additives may be combined with the polycarbonate before and/or after the polycarbonate has melted. The additives may be combined with the polycarbonate which has partly melted.

The method according to the invention may further comprise cooling the end-capped polycarbonate resin and cutting the cooled polycarbonate resin into pellets.

<u>End-capped polycarbonate resin</u>

The end-capped polycarbonate resin manufactured in accordance with the invention has a lower amount of dihydroxy compound and/or a similar or higher molecular weight and/or a higher end-cap level compared to an otherwise identical polycarbonate resin manufactured under otherwise identical conditions yet without the addition of an end-capping reagent comprising anhydride acid.

The end-capped polycarbonate resin may have a weight average molecular weight from e.g. 30,000 to 70,000 g/mol, for example 30,000 to 50,000 g/mol or 50,000 to 70,000 g/mol, as determined using GPC on the basis of polystyrene standards.

In some embodiments, the end-capped polycarbonate resin has a weight average molecular weight of at least 36,000 g/mol, as determined using GPC on the basis of polystyrene standards.

Preferably, the end-capped polycarbonate resin has an endcap level of at least 60%, more preferably from 65 to 95%, even more preferably 70 to 95%, wherein the endcap level is defined as the percentage of polycarbonate chain ends which are not hydroxyl groups. Thus a polycarbonate resin having and endcap level of 60% means that the polycarbonate has 40% of chain ends that are phenolic OH end groups, usually resulting from the bisphenol A monomer. The other 60% of end groups do not contain an OH end group and may be phenolic (usually originating from the diphenylcarbonate) or correspond to the end capping reagent molecule(s).

The endcap level is calculated with the following formula

$$\%EC = 100 - ((ppmOH \times Mn)/340000)$$

wherein %EC is the endcap level, ppmOH is the amount of hydroxyl end groups in parts per million by weight and Mn is the number average molecular weight of the polycarbonate based on polycarbonate standards.

Thus, the endcap level is defined as the mole percentage of end-groups of the end-capped polycarbonate resin that is not a hydroxyl group and can be calculated from the amount of terminal OH groups in the end-capped polycarbonate resin and the number average molecular weight (Mn).

The amount of chain ends that are end-capped with the end-capping reagent is preferably at least 40% on the basis of the total amount of end-groups.

It will be appreciated that some amounts of residual materials used during the method for the manufacture for the end-capped polycarbonate resin may remain in the end-capped polycarbonate resin obtained by the method. Accordingly, term "polycarbonate resin" as used herein is understood to include not only the polycarbonate molecules but also the residual materials.

In some embodiments, the dihydroxy compound is bisphenol A and the amount of residual bisphenol A in the end-capped polycarbonate resin is at most 50 ppm, preferably at most 25 ppm, more preferably at most 10 ppm, most preferably at most 5 ppm based on the weight of the end-capped polycarbonate resin.

In some embodiments, the amount of hydroxyl-end groups in the polymer chain is at most 1100 ppm, preferably at most 500 ppm, more preferably at most 450 ppm based on the weight of the end-capped polycarbonate resin.

The amount of residual dihydroxy compound in the end-capped polycarbonate resin may be determined by the following method.

Sample preparation:

Dissolve 0.5 gram of polycarbonate in 5 ml Dichloromethane (DCM) and precipitate the polycarbonate with 10 ml Methanol. Filter the solution into a LC sampler vial.
Analytical Technique:

Liquid Chromatography-Diode Array Detector (HPLC-DAD).
Column: Zorbax Eclipse XDB-C18 4.6 x 75 mm 3.5 um.
Column Temperature: 35ºC.
Wavelengths: 280nm (BPA)

Polymer composition

The present invention further provides a polycarbonate composition comprising the end-capped polycarbonate resin and additives.

Suitable examples of the additives include one or more of an impact modifier, flow modifier, filler, reinforcing agent (e.g., glass fibers or talc), antioxidant (primary antioxidant and/or secondary antioxidant), heat stabilizer, light stabilizer, UV light stabilizer and/or UV absorbing additive, plasticizer, lubricant, release agent, in particular glycerol monostearate, pentaerythritol tetra stearate, glycerol tristearate, stearyl stearate, antistatic agent, antifog agent, antimicrobial agent, colorant (e.g., a dye or pigment), flame retardant either or not combined with an anti-drip agent such as polytetrafluoroethylene (PTFE) or PTFE-encapsulated styrene-acrylonitrile copolymer. The present invention is not limited in terms of the type and amount of additives.

In some embodiments, the polycarbonate composition comprises at least one of a primary antioxidant and a secondary antioxidant.

In some embodiments, the polycarbonate composition consists of the polycarbonate according to the invention and at least one of a primary antioxidant and a secondary antioxidant.

The present invention further provides a thermoplastic composition comprising the end-capped polycarbonate resin according to the invention or the polycarbonate composition according to the invention and at least one further polymer, preferably selected from the group consisting of polycarbonate - polyorganosiloxane copolymers, polycarbonate-polyester copolymers, polyesters, polyolefins, acrylonitrile/butadiene/styrene copolymer, methyl methacrylate/butadiene/styrene copolymer, styrene/butadiene/styrene copolymer (SBS), styrene/ ethylene-butylene /styrene copolymer (SEBS), styrene/ ethylene-propylene /styrene copolymer (SEPS) styrene/acrylonitrile copolymer (SAN), acrylonitrile/styrene/acrylonitrile copolymer (ASA), polybutylene terephthalate (PBT), polyethylene terephthalate (PET), unsaturated polyester (UPES), polyamide (PA), thermoplastic urethane (TPU), polystyrene (PS), high impact polystyrene (HIPS), polyvinyl chloride (PVC), polyetherimides, polysulfones. This may be performed by melt-mixing. The amount of the polycarbonate resin may e.g. be at 5 to 95 wt%, 50 to 95 wt% or 55 to 95 wt% with respect to the total of the end-capped polycarbonate resin with the at least one further polymer.

The thermoplastic composition according to the invention may be made e.g. by melt-mixing the end-capped polycarbonate resin according to the invention or the polycarbonate composition according to the invention and the at least one further polymer.

The present invention further provides a molded article comprising or consisting of the end-capped polycarbonate resin according to the invention, the polycarbonate composition according to the invention or the thermoplastic composition according to the invention.

The present invention further provides a method for the manufacture of a molded article comprising molding the end-capped polycarbonate resin according to the invention, the polycarbonate composition according to the invention or the thermoplastic composition according to the invention.

The present invention further provides a use of an acid anhydride as an end-capping reagent for reacting with a polycarbonate having at least 10 ppm of free-hydroxyl end-groups to obtain an end-capped polycarbonate resin with a reduced amount of residual dihydroxy compound compared to the amount of residual dihydroxy compound in the polycarbonate.

The present invention will now be further elucidated on the basis of the following nonlimiting examples.

The end-capped polycarbonate resin was produced as described below.

BPA and DPC were introduced in a monomer mixing device which was kept at a temperature of 170 ºC at a pressure of about 1050 mbar. 50 micromoles of tetra butyl phophonium acetate (TBPA) per mole of BPA was also added as a beta catalyst.

The monomer mix was then introduced in the first oligomerisation reactor operating at a temperature of 250-270°C and a pressure of 155-190 mbar. The initial DPC/BPA ratio (molar ratio) was adjusted with additional DPC to 1.020-1.045 and an amount of NaKHPOa as alpha catalyst was added. The carbonate oligomer formed in the first oligomerisation reactor was fed to the second oligomerisation reactor operating at a temperature of 275-295 ºC and a pressure of 10-37 mbar.

The so formed carbonate oligomer was then introduced to a first polymerisation reactor operating at a temperature of 295-300 ºC and pressure of 2.0-4.0

An amount of 30 g. of the produced material from the first polymerisation reactor was combined with the end-capping reagent, i.e. the anhydride (solid powder), such that the molar ratio of the anhydride to OH content in the polycarbonate is maintained at 1:1 or 3:1. The composition was mixed in a glass reactor and heated to 300°C for 25 minutes while maintaining the pressure of the reaction vessel at 1 mBar. The polycarbonate mixture was isolated after the reaction and characterized using standard analytical techniques such as Gel Permeation Chromatography (GPC) for MW (using polystyrene standard), Fries branching content by HPLC (using Fries standard) and unreacted BPA residuals by HPLC. NMR spectroscopy was used to determine the incorporation of the anhydride in the backbone of polycarbonate.

The structure of the resulting end-capped polycarbonate resin was analysed by NMR.

The amount of the residual BPA was measured by HPLC-DAD.

The amount of residual benzoic acid was measured by HPLC.

MW was determined using GPC on the basis of polystyrene standards.

The endcap level %EC was determined as

$$\%EC = 100 - ((ppmOH \times Mn)/340000)$$

wherein %EC is the endcap level, ppmOH is the amount of hydroxyl end groups in parts per million by weight and Mn is the number average molecular weight of the end-capped polycarbonate resin based on polycarbonate standards.

The amount of hydroxyl end groups was determined by 31P NMR. For this, 200 mg of PC sample was dissolved in 2 ml CDCl3 (deuterated chloroform) solvent containing Cr(acac)3 and mesitol as internal standard. A few drops of 1,2-phenlyene phosphorochloridite (PPC) were added and mixed together which resulted in derivatization of OH end-groups. The NMR spectra have been recorded on an Agilent 400 MHz spectrometer equipped with a probe operating at 25°C.

The amount of the specific end-capping reagent comprising acid anhydride which was incorporated into the end-capped polycarbonate resin was determined by 1H NMR spectroscopy. 1H NMR spectra in $CDCl_3$ was used to calculate the incorporation of the end-capping reagent. The concentrations were calculated based on the amount of BPA or on internal standard mesitol. The mass of the new end-cap was taken as follows: 121.g / mol in the case of end-capping reagent derived from benzoic anhydride and 85.08 g / mol in the case of end-capping reagent derived from methacrylic anhydride.

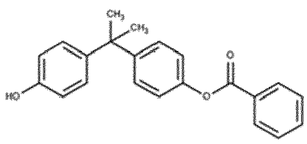

121.1 g/mol

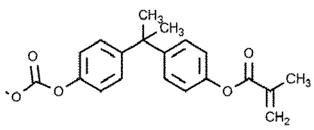

85.08 g / mol

In addition, a percentage is calculated of the amount of 'new end-cap', meaning the percentage of end-capping that is generated by the addition of the end-capping reagent comprising acid anhydride. In general, part of the end-capping is phenyl carbonate end-capping generated by the formulation itself (in the case of these Examples by BPA + DPC), and an additional part is generated by the addition of the end-capping reagent. The 'New end-cap' percentage specifies the latter part.

Table 1 provides an overview of the different examples.

Table 1: example overview

| Example | Anhydride | Molar ratio anhydride : hydroxyl groups |
|---|---|---|
| CE1 | - | n.a. |
| E1 | Benzoic anhydride | 1:1 |
| E2 | Benzoic anhydride | 3:1 |

(continued)

| Example | Anhydride | Molar ratio anhydride : hydroxyl groups |
|---|---|---|
| E3 | Methacrylic anhydride | 1:1 |
| E4 | Methacrylic anhydride | 3:1 |

Table 2 summarizes the obtained results. The results include the weight averaged molecular weight of the end-capped polycarbonate resin based on polystyrene standards (MwPS), the number averaged molecular weight of the end-capped polycarbonate resin based on polystyrene standards (MnPS), and the number averaged molecular weight of the end-capped polycarbonate resin based on polycarbonate standards (MnPC). The polydispersity index (PDI) can be used as measure of broadness of molecular weight distribution: the larger the PDI, the broader the molecular weight. The PDI is the ratio of the MwPS and the MnPS. The amount of hydroxyl end-groups (OH), the endcap level (Total EC%, calculated as shown above), the amount of residual BPA, the amount of end-capping reagent incorporated into the end-capped polycarbonate resin, and the new endcap level (New End-cap %, described above) are also shown in Table 2.

Table 3: results

| Example | MwPS (g/mol) | MnPS (g/mol) | MnPC (g/mol) | PDI | OH (ppm) | Total EC (%) | Res-BPA (ppm) | End-capper incorporation (ppm) | New End-cap (%) |
|---|---|---|---|---|---|---|---|---|---|
| CE1 | 59968 | 26139 | 13467.3 | 2.2942 | 1352 | 46.4 | 30 | N.A. | 0 |
| E1 | 45692 | 18798 | 10331.9 | 2.43068 | 1050 | 68.1 | 16 | 4950 | 20.9 |
| E2 | 32526 | 12973 | 7577.21 | 2.50721 | 405 | 91.0 | 4 | 12780 | 39.6 |
| E3 | 52173 | 22868 | 11737.8 | 2.28149 | 1105 | 61.9 | 22 | 1038 | 7.1 |
| E4 | 46212 | 20309 | 10443.5 | 2.27544 | 858 | 73.6 | 14 | 3239 | 19.7 |

It should be noted that the amount of residual benzoic acid was measured, but was below detection limit for all (comparative) examples.

It can be seen from Table 2 that the use of an end-capping reagent comprising an acid anhydride leads to a higher end-capping percentage then when no anhydride is used, and that the amount of residual dihydroxy compound (BPA) has reduced significantly. These effects can be seen most strongly when benzoic anhydride is used in a 3:1 ratio to the amount of hydroxyl end-groups. The last two columns of Table 3 confirm that the additional end-capping is indeed achieved by the addition of the end-capping reagent.

At the same time it can be seem from Table 2 that the MW of the obtained end-capped polycarbonate resin is still relatively high, and is kept at an acceptable level compared to the comparative example without acid anhydride.

## Claims

**1.** Method for preparing an end-capped polycarbonate resin, comprising the steps of:

- providing a polycarbonate having at least 10 ppm free-hydroxyl end groups, determined in accordance with the method set out in the description,
- reacting said polycarbonate with an end-capping reagent, wherein said reacting occurs in a molten phase,

wherein said end-capping reagent comprises an acid anhydride.

**2.** Method according to claim 1, wherein the acid anhydride is selected from a symmetric or asymmetric acyclic anhydride, a cyclic anhydride, a dianhydride or a combination thereof.

**3.** Method according to claim 2, wherein the acid anhydride is an acyclic anhydride according to Formula I:

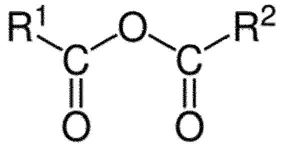

wherein $R^1$ and $R^2$ are independently selected from substituted or unsubstituted, linear or branched C1-C20 hydrocarbon group, preferably wherein the acyclic anhydride is a symmetrical aromatic carbonate according to formula II:

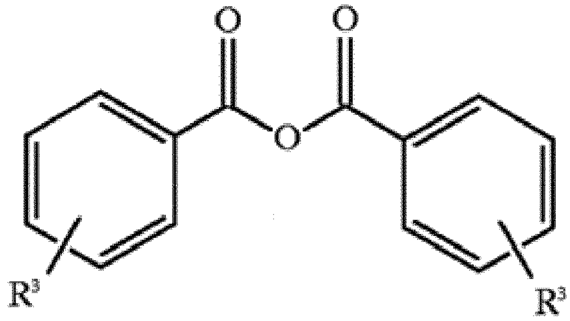

,

(II)

wherein $R^3$ is selected from hydrogen, halogen, aryl, branched alkane, alkyne, carboxyl, and CN, more preferably wherein the acyclic anhydride is according to formula 1:

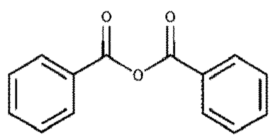

(1)

being benzoic anhydride.

4. Method according to any of the preceding claims, wherein the end-capping reagent is added in an amount such that the mole ratio of total carbonate in the end-capping reagent to free-hydroxyl end groups is from 0.5 to 10.

5. Method according to any of the preceding claims, wherein said reacting of said polycarbonate with said end-capping reagent takes place in a melt mixing device, preferably an extruder.

6. Method according to any of the preceding claims, wherein said polycarbonate is a homopolymer or a copolymer, preferably wherein said polycarbonate comprises or consists of bisphenol A (BPA) polycarbonate homopolymer.

7. Method according to any of the preceding claims, wherein said polycarbonate comprises or consists of interfacial polycarbonate or melt polycarbonate.

8. Method according to any of the preceding claims, wherein said polycarbonate is in particulate form, preferably in the form of pellets, flakes or powder.

9. Method according to any of the preceding claims, wherein said polycarbonate is provided in molten phase.

10. End-capped polycarbonate resin obtained or obtainable by the method of any one of claims 1-9.

11. End-capped polycarbonate resin according to claim 10, wherein the end-capped polycarbonate resin a weight

average molecular weight of at least 36,000 g/mol, as determined using GPC on the basis of polystyrene standards.

**12.** End-capped polycarbonate resin according to claim 10 or 11, wherein the amount of residual dihydroxy compound or residual bisphenol A in the polycarbonate is at most 50 ppm, preferably at most 10 ppm based on the weight of the end-capped polycarbonate resin.

**13.** Molded article comprising or consisting of the end-capped polycarbonate resin of claim 10-12.

**14.** Method for the manufacture of a molded article comprising molding the end-capped polycarbonate resin according to claim 10-12.

**15.** Use of an acid anhydride as an end-capping reagent for reacting with a polycarbonate having at least 10 ppm of free-hydroxyl end-groups to obtain an end-capped polycarbonate resin with a reduced amount of residual dihydroxy compound or residual bisphenol A compared to the amount of residual dihydroxy compound in the polycarbonate.

Europäisches Patentamt
European Patent Office
Office européen des brevets

# EUROPEAN SEARCH REPORT

Application Number
EP 23 38 3211

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 4 290414 B2 (ASAHI KASEI CHEMICALS CORP) 8 July 2009 (2009-07-08)<br>* example 1 *<br>* Claims *<br>* paragraph [0021] *<br>----- | 1-15 | INV.<br>C08G64/14 |
| X | US 4 066 630 A (DIXON DALE D ET AL) 3 January 1978 (1978-01-03)<br>* Claims *<br>* example 4 *<br>* column 1 *<br>----- | 1,2,6,7,<br>10,13,14 | |
| X | LEE SHICHOON ET AL: "Preparation of the anhydride terminated polycarbonate and its reactive compatibilization with polystyrene",<br>JOURNAL OF APPLIED POLYMER SCIENCE,<br>vol. 77, no. 6, 8 August 2000 (2000-08-08), pages 1338-1347, XP093149302,<br>US<br>ISSN: 0021-8995, DOI:<br>10.1002/1097-4628(20000808)77:6<1338::AID-APP19>3.0.CO;2-C<br>* page 1339 - page 1340 *<br>----- | 1,2,4,6,<br>7,10 | TECHNICAL FIELDS SEARCHED (IPC)<br>C08G |
| A | US 2003/144456 A1 (WHITNEY JOHN MORGAN [US] ET AL) 31 July 2003 (2003-07-31)<br>* Claims *<br>* Examples *<br>----- | 1-15 | |

The present search report has been drawn up for all claims

1

| Place of search | Date of completion of the search | Examiner |
|---|---|---|
| The Hague | 9 April 2024 | Pouilley, Delphine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........
& : member of the same patent family, corresponding document

EPO FORM 1503 03.82 (P04C01)

## ANNEX TO THE EUROPEAN SEARCH REPORT ON EUROPEAN PATENT APPLICATION NO. EP 23 38 3211

This annex lists the patent family members relating to the patent documents cited in the above-mentioned European search report. The members are as contained in the European Patent Office EDP file on
The European Patent Office is in no way liable for these particulars which are merely given for the purpose of information.

09-04-2024

| Patent document cited in search report | Publication date | Patent family member(s) | Publication date |
|---|---|---|---|
| JP 4290414 B2 | 08-07-2009 | JP 4290414 B2 | 08-07-2009 |
| | | JP 2004168900 A | 17-06-2004 |
| US 4066630 A | 03-01-1978 | NONE | |
| US 2003144456 A1 | 31-07-2003 | CN 1697849 A | 16-11-2005 |
| | | US 2003105271 A1 | 05-06-2003 |
| | | US 2003144456 A1 | 31-07-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2003144456 A1
- US 6706846 B2